# EUROPEAN PATENT APPLICATION

(11) **EP 3 043 299 A1**
(43) Date of publication of application: **13.07.2016**
(21) Application number: 15198680.9
(22) Date of filing: 09.12.2015
(51) Int. Cl.: G06Q 10/08, G06Q 10/00, G06Q 10/06, G05B 23/02

(54) **AIRCRAFT ENGINE MAINTENANCE SYSTEM**

(30) Priority: 07.01.2015 GB 201500179
(71) Applicant: Rolls-Royce plc, London SW1E 6AT (GB)
(72) Inventor: Ellis, Sean, Derby, Derbyshire DE24 8BJ (GB); Vyas, Parag, Derby, Derbyshire DE24 8BJ (GB); Richardson, Nnaekezie, Derby, Derbyshire DE24 8BJ (GB); Moxon, Matthew, Derby, Derbyshire DE24 8BJ (GB); Inceleme, Ekin, Derby, Derbyshire DE24 8BJ (GB)
(74) Representative: Rolls-Royce plc

(57) **Abstract**

A computerised aircraft engine maintenance planning system for maintaining an aircraft engine fleet comprising a plurality of aircraft engines, each engine in the fleet comprising an engine health monitoring system configured to provide data indicative of an incipient fault for a respective engine. The planning system comprises:
a fault forwarding sub-system configured to receive indications of incipient faults from respective engine health monitoring systems, the fault forwarding system being configured to identify two or more engines having linked incipient faults; and
a queuing sub-system configured to assign each engine identified as having an incipient fault to a virtual maintenance queue position;
wherein the queuing sub-system is configured to group engines having linked incipient faults to adjacent queue positions.

## Description

The present invention relates to an aircraft engine maintenance system and a method of planning maintenance of engines for a fleet of aircraft.

Aircraft fleet planning is crucial to the operational success of aircraft operators, both in terms of safety and efficiency. Fleet planning techniques also have significant impact on the commercial success of airlines, which are the focus of the following disclosure. In particular, aircraft engines require frequent maintenance and overhaul. While an engine is being overhauled or maintained, the aircraft cannot be flown in passenger service, and cannot therefore contribute to revenue. Consequently, each additional day an engine is in maintenance represents significant lost revenue to the operator.

According to conventional fleet management techniques, maintenance events for aircraft gas turbine engines are scheduled in order to meet regulatory authority requirements. It is also generally known to strive to arrange maintenance events around intended maintenance-free periods (i.e. periods in which maximum asset availability is required) within the repair capacity of an airline.

To this end, a number of commercially available maintenance planning software applications provide some form of scheduling capability. However in such conventional approaches, a significant level of human experience and input is required to ensure a suitable fleet schedule is proposed. The most important criteria to such a skilled person tend to be compliance with regulations and the avoidance of exceeding a given repair capacity. Thus a conventional approach to scheduling would be to first schedule for compliance and subsequently balance the schedule to manage the workload. If it is determined that capacity is overstretched or insufficient, then it may be that the repair capacity is increased accordingly. Furthermore, it is difficult to foresee when unscheduled engine faults might occur. Consequently, maintenance facilities may be used inefficiently. Furthermore, a system for which the repair capacity is stretched during time periods of peak demand, represents inefficiencies over other time periods. A number of other factors, such as operating margin deterioration, reliability risks, availability of spares, etc, all influence a fleet. Accordingly conventional methods can lead to widely varying maintenance schedules being proposed by different people for a given scenario, each of which is based on the bespoke style of decision making of the individual, and none of which are likely to be optimal.

Furthermore such conventional planning strategies are prone to manual error and can lead to significant overhead costs as well as the need for large contingency budgets to accommodate any flaws in the plan.

It is an aim of the present invention to provide an aircraft engine maintenance planning system and associated tool and method which allow for more efficient aircraft engine asset management.

According to a first aspect of the disclosure there is provided a computerised aircraft engine maintenance planning system for maintaining an aircraft engine fleet comprising a plurality of aircraft engines, each engine in the fleet comprising an engine health monitoring system configured to provide data indicative of an incipient fault for a respective engine, the planning system comprising:
a fault forwarding sub-system configured to receive indications of incipient faults from respective engine health monitoring systems, the fault forwarding system being configured to identify two or more engines having linked incipient faults; and
a queuing sub-system configured to assign each engine identified as having an incipient fault to a virtual maintenance queue position;
wherein the queuing sub-system is configured to group engines having linked incipient faults to adjacent queue positions.

It has been determined by the inventor that by identifying engines having linked incipient faults, and placing engines having linked incipient faults in adjacent maintenance queue positions, more efficient use of maintenance equipment and staff can be made. This is thought to be the case since, in many cases, aircraft engine repairs require extensive equipment setup times. By placing engines having linked faults in adjacent queue positions, these setup times need only be incurred once. This is made possible by the ability of the engine health management system to identify incipient faults, and forward these faults to the system, thereby providing advanced notice of a maintenance requirement. Consequently, a maintenance plan can be made in advance, and engines can be for maintenance in an efficient manner.

The linked incipient faults may comprise incipient faults in equivalent modules or line replaceable units of the two or more engines, and / or faults requiring the use of the same repair process or repair equipment. Advantageously, it has been found that by placing engines having incipient faults in the same module and / or requiring the same repair process or equipment in adjacent maintenance queue positions, significant efficiencies can be achieved, since setup time for the repair is substantially reduced.

Each engine health monitoring system may be configured to provide a component remaining useful life estimation for the respective engine to the fault forwarding sub-system. The respective engine may be determined to have an incipient fault where the remaining useful life estimation fall below a predetermined threshold.

The queuing sub-system may be configured to order grouped engines in the virtual queue such that engine groups are prioritised in order of descending size. Alternatively or in addition, the queuing sub-system may be configured to order grouped engines in the virtual queue such that engine groups having an engine having a component remaining useful life below a predetermined threshold are prioritised ahead of other engine groups. The engine having the lowest component useful life may be prioritised ahead of other engines within the respective engine group.

Alternatively or in addition, the queuing sub-system may be configured to order grouped engines in the virtual queue such that the groups are prioritised in descending order of group size. Consequently, groups having the largest number of engines are prioritised ahead of smaller groups. Consequently, fewer breaks to re-setup the maintenance equipment are required, since larger groups of engines are serviced consecutively. Lower priority (i.e. smaller groups) will therefore remain at lower positions within the queue until there are sufficient engines within the group to raise the priority of that group.

Alternatively or in addition, the queuing sub-system may be configured to order grouped engines in the virtual queue such that a group having the same linked quantity as an engine currently undergoing a repair operation receives the highest priority in the queue. Advantageously, where an engine is undergoing repair, engines having linked quantities with that engine are prioritised, thereby minimising disruptions caused by unplanned maintenance.

The planning system may comprise an engine pull sub-system configured to provide a pull signal to a maintenance operation. The pull sub-system may be configured to provide a pull signal when the highest priority group has more than a predetermined number of engines, and then continue providing pull signals until the pulled group has no remaining engines. Alternatively or in addition, the pull sub-system may be configured to provide a pull sub-system when an engine within the highest priority group has a remaining life estimation below a predetermined threshold.

According to a second aspect of the disclosure, there is provided a computerised method of planning engine maintenance of an aircraft engine fleet, each engine in the fleet comprising an engine health monitoring system configured to provide an indication of an incipient fault for a respective engine, the method comprising:
using the engine health monitoring systems of respective engines to identify two or more engines having linked incipient faults;
assigning each engine identified as having an incipient fault to a virtual maintenance queue position in a queuing sub-system;
wherein engines having linked incipient faults are grouped to adjacent queue positions.

According to a third aspect of the disclosure, there is provided a data carrier comprising machine readable instructions for operation of one or more processors to perform the method of the second aspect.

Any, or any combination, of the preferable or essential features defined in relation to any one aspect of the disclosure may be applied to any other aspect of the disclosure wherever practicable.

One or more working embodiments of the present disclosure are described in further detail below by way of example with reference to the accompanying drawings, of which:
Figure 1 shows a schematic of a computerised aircraft engine maintenance planning system in accordance with the present disclosure;
Figure 2 shows a schematic cross sectional view of a gas turbine engine of the system of figure 1;
Figure 3 shows a schematic of part of an aircraft fleet maintenance system in accordance with the present disclosure;
Figure 4 shows a graph representing an input queue for a fleet of engines requiring repair in accordance with the present invention;
Figure 5 shows a queue sorted in accordance with the method of the present disclosure; and
Figure 6 shows a flow diagram illustrating a method of planning engine maintenance of an aircraft engine fleet in accordance with the present disclosure.

The embodiments of the invention described below allow for semi or fully automated scheduling of maintenance events for a number of engines in an aircraft fleet in a manner which balances reliability, compliance and cost effectiveness with repair resources and infrastructure support capacity. This strategy allows optimisation of the availability of the maintenance or repair resources.

The terms 'maintenance' and 'maintenance events' are used hereinafter to refer to any kind of actions which may require taking an engine out of service and / or removal from an aircraft to ensure correct functioning of an engine, and which may include any or any combination of engine inspection, checking, testing, servicing, repair, overhaul, recall, adjustment, renovation, cleaning or the like. Whilst not described in detail below, the rationale of the present disclosure may be extended to include the decommissioning or other permanent removal of engines from service, or replacement of engines with new engines.

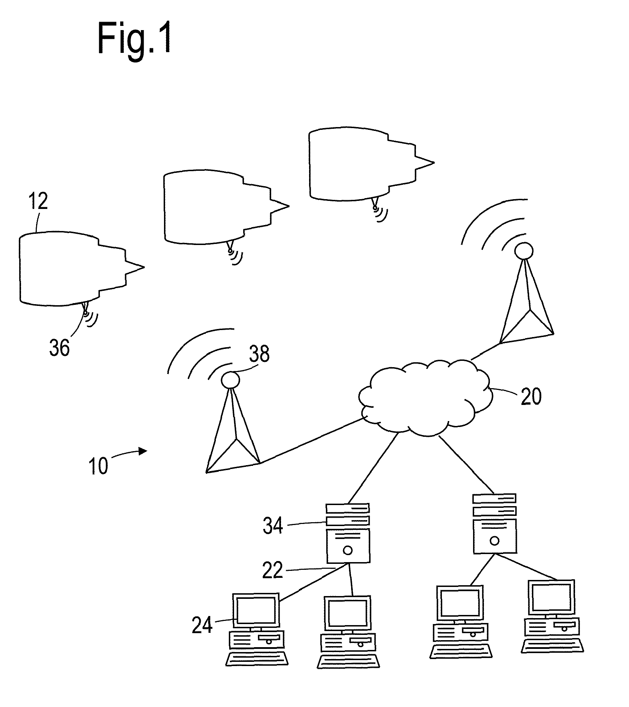

Turning now to figure 1, there is shown an overview of a system 10 in which the present disclosure may be incorporated. A plurality of gas turbine engines 12 are depicted which are in service or 'on wing' for a fleet of aircraft (not shown). Each aircraft in the fleet will typically have two or four engines 12 thereon.

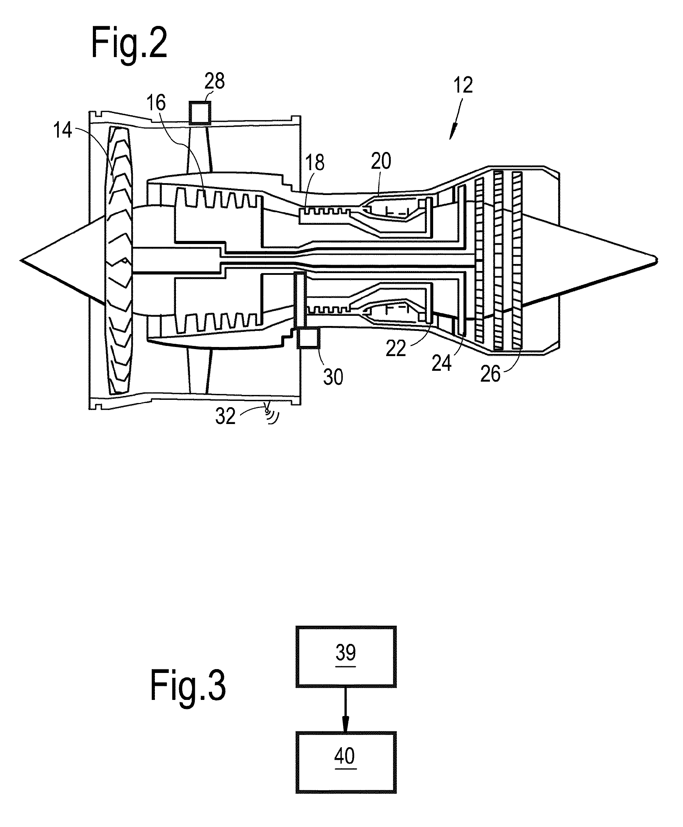

Referring to figure 2, each engine comprises a plurality of line replaceable units (LRUs) including a fan module 14, intermediate compressor module 16, high pressure compressor module 18, combustor module 20, high, intermediate and low pressure turbine modules 22, 24, 26, a controller module 28, and a gearbox module 30. Each of these modules 14-30 can be removed and replaced individually, though in some cases other modules 14-30 may have to be removed in order to access one or more of these modules 14-30. In general, in order to at least repair and, in some cases, remove and refit each module 14-30, specialised equipment must be used, which involves a setup time, typically of the order of 24 hours. Generally, a finite number of engine repair bays are available, one of which will be required where the engine is to be removed from the aircraft in order to perform maintenance thereon. In some cases, further modules may be provided, and one or more of the modules 14-30 may comprise a plurality of sub-modules, which may be removable without removing other parts of the module.

Each engine 12 comprises an engine health monitoring system, 32. Data relating to the operation of each engine 12 is typically collected by the engine health monitoring system over the engine operational life using conventional sensors and comprises a measure of the duration of operation of the engine, such as, for example, by way of a record of the operational age, the number of operational hours or flight cycles completed. Data is collected for each engine module 14-30 individually. The data collected will typically also include a variety of other operational measures such as fuel consumption, operation speeds or more detailed reports of performance as are common under conventional equipment health monitoring (EHM) practices. Conventional sensors known to those skilled in the art are located on an engine or aircraft to generate readings of any or any combination of Weight on Wheels (WoW), fuel consumption, operating time, cycle time or frequency, operational speeds (such as rotor speeds), temperatures, pressures and the like. It will be appreciated that the term 'sensor' as used herein covers apparatus such as clocks, timers and counting equipment, such as may be used to count accrued engine or flight cycles.

Using this data, incipient faults of one or more of the modules 14-30 can be identified. For example, the data could be utilised to determine whether a component of a module has an out of bounds operating parameter. In one instance, the engine health monitoring system may be utilised to estimate a remaining life of the module, i.e. a remaining amount of time, operating time or number of cycles that a component of the module can continue to operate satisfactorily before the risk of sudden failure increases beyond a predetermined level, or the performance of the component falls below a predetermined level. For example, the gearbox module 30 includes an electrical generator (not shown). Where sensors (such as for example speed, temperature, electrical resistance or electrical reactance sensors) show that the component is performing below a nominal level, it may be determined that a performance level (such as the power produced by the generator) will fall below a required level within a certain number of operating hours. If this number of operating hours is in turn below a predetermined level, then the generator module will be determined to have an incipient fault (as one of the components of the module is determined to have an out of bounds operating parameter). Alternatively, the risk of failure (which may be a risk of failure per flight hour) of a component of each module 14-30 could be calculated, and an incipient failure could be identified where the risk of failure exceeds a predetermined threshold. The risk of failure could be calculated in accordance with the method described in applicant's co-pending application EP 2486520, incorporated herein by reference.

The operational data for the engines 12 is communicated to a control or monitoring centre where records for all engines in the fleet are gathered in a server 34 of the computerised aircraft engine maintenance planning system. In some cases, the raw data including for example sensor data, may be communicated to the server 34. In other cases, the data may be processed on-board the aircraft, in which case the data transmitted to the server 34 may comprise an indication of an incipient fault in one or more of the engine modules. In other cases, the indication of an incipient fault in one or more of the engine modules is determined by the server 34 from the raw sensor data. This is achieved by transmission of operational data, typically at the end of each aircraft flight, from the engine or associated aircraft to the server 34. In the embodiment shown one or more wireless transmitters 36 associated with each engine 12 transmits data signals to a receiver 38, which may comprise a base station, for example within a cellular network. The data is transmitted from the receiver 38 to the server 34 via a wide area network (WAN) such as the internet 20. It will be appreciated that a variety of methods for transmission of operational data may be used which may include different wireless data transmission standards or protocols or else a wired connection between an engine, or aircraft, and the internet 20. Alternatively operational data may be recorded to a removable data storage device such as a memory stick, laptop or even paper records or documentation for subsequent retrieval by and/or transmission to the server 34.

The server 34 is associated with a network 22, typically a secure local area or wide area network, over which the operational data can be disseminated for processing and or analysis using networked work stations 24. The combination of server 34 and network 22 is generally described herein as a monitoring or control centre and may comprise an aircraft engine fleet monitoring service provider or else the aircraft fleet operator organisation. Depending on the particular setup for engine maintenance planning monitoring and control, the operational data may be communicated to both a service provider and also the aircraft fleet / maintenance operator. The service provider may then process the data and make available a subset of data or else the results of the data processing to the fleet operator, either by transmission thereof or else by hosting a web site which is accessible to the asset operator via the internet 20 or other network.

In any of the above described embodiments, the operational data is processed so as to allow planning and scheduling of required maintenance events in a manner to be described below. It is also possible that such processing could be carried out on-board an aircraft or else by processing means mounted on an engine 12 and subsequently communicated to the relevant monitoring or control centre. In the proposed implementation of the invention, the maintenance planning tool or application is server-based in order to provide for quality control and continuity. Alternatively, the system of the present disclosure could be implemented in dedicated hardware.

Referring to figure 3, the aircraft engine maintenance planning system 10 comprises a fault forwarding sub-system (represented schematically as box 39 in figure 3) and a queuing sub-system (represented schematically as box 40 in figure 3). The fault forwarding sub-system is configured to forward incipient faults identified from engine health management monitoring data in order to identify engines having a module which will require maintenance in the near future, along with a time by which the maintenance must be performed. This fault is forwarded to the queuing sub-system 40, which plans maintenance activity to be carried out. It will be understood that the systems 39, 40 could be implemented either as software applications run on a general purposed computer, or could be implemented in dedicated hardware.

In accordance with the present disclosure, a maintenance schedule is determined by the queue sub-system 40, which may then be communicated to the maintenance facility, in order to plan maintenance of the fleet. The queue sub-system identifies engines 12 from the fleet having linked incipient faults. Linked incipient faults are incipient faults on different engines 12 of the fleet that could for instance require repair utilising the same repair process, equipment or personnel. In many cases, this will comprise incipient faults that occur on common modules - for example, where two engines 12 in the fleet have incipient faults in the fan module 14, the engines 12 would be identified by the queue sub-system 40 as being linked faults, even if such faults resulted from different causes, or comprise faults within different components within that module. Engines 12 having linked incipient faults are placed in adjacent positions in a virtual queue, i.e. engines 12 having linked incipient faults are scheduled for service consecutively. It has been found by the inventors that a large proportion of maintenance time in engine repair workshops is used inefficiently by setting up equipment and work-stands within maintenance facilities in order handle a single engine, which then must be re-setup in order to handle a subsequent engine, which will generally have a fault of a different type. Alternatively, specifically trained personnel may be required to service a particular module or component, who may then need to be physically transferred to that location. The present disclosure removes this inefficiency by ensuring that several engines having linked incipient faults are repaired sequentially, thereby reducing setup times in the maintenance facility. This is made possible by the ability of health monitoring systems to predict incipient failures, thereby permitting engines maintenance to be planned ahead of time.

In addition to grouping engines having linked incipient faults in adjacent positions in the virtual queue, the queuing sub-system 40 optimises the queue by prioritising engines within the fleet in accordance with a plurality of factors.

For example, engine groups are prioritised within the queue. Generally, groups are prioritised within the queue in descending order of group size. Consequently, fewer setup times are required, as larger groups will be service consecutively.

However, groups may also be prioritised in descending order of urgency by comparing the remaining component useful lives of the engine fleet, and arranging the queue such that groups containing an engine which has a component having the least useful remaining life of engines within the fleet are prioritised ahead of other groups. These two considerations (group size and urgency) could be combined in different ways - for example urgency could be a secondary consideration, in which case, only groups of equal size could be ordered in accordance with urgency. On the other hand, urgency could be given priority, in which case groups having an engine within that group having a remaining useful life below a predetermined threshold may be prioritised, with the remainder of the groups being prioritised in terms of group size. A still further alternative would be to provide a weighting, with urgency receiving a higher or lower weighting for example depending on the degree of urgency.

Engines 12 within groups are also prioritised according to need. For example, engines 12 within a group are prioritised in terms of remaining component useful life, such that engines comprising components having the least useful remaining life are placed ahead of other engines within the same group in the queue. Consequently, engines are prioritised, while ensuring the maintenance facility is utilised as efficiently as possible.

The method of the present disclosure can also be integrated with routine maintenance, or with restrictions. For example, if it is known that an engine requires maintenance due to a fault on a module 14-30 on a particular date to comply with a predetermined maintenance schedule, the engine is queued into the position in the queue which would correspond to being pulled on that date. Engines having linked quantities would then be included with that group, so that the advantages of the present disclosure can be achieved.

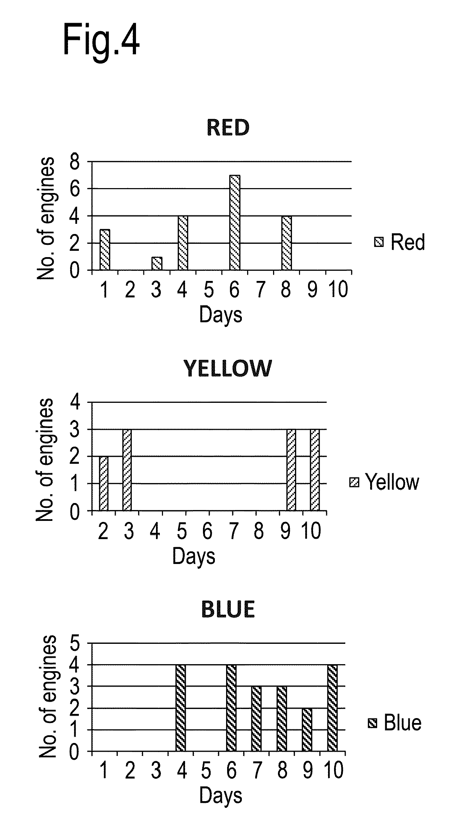

Figure 4 shows a simplified example dataset to be sorted by the method of the present invention. In this example, only three linked quantities are considered for simplicity, though it would be understood that in general, more linked quantities would be present in the dataset. Figure 4 shows the number of engines of each type which will fail and require maintenance on a given day. The engine health monitoring system can be used to predict these failures ahead of time (i.e. provide an indication of an incipient fault).

In this example, the engine health monitoring system is utilised to determine incipient engines faults across the engine fleet. In this example, the engine health monitoring system is capable of providing an indication of an incipient fault such that approximately 10 days warning can be provided that an engine will develop a fault, and so require servicing (referred to hereafter as a "look-ahead" of 10 days). The more notice of impending faults that can be provided by the engine health monitoring system provides, the more useful the method of the present disclosure becomes. However, in modelling, the method of the present disclosure has been found to be useful where the engine health monitoring system provides as little as five days' notice of impending faults.

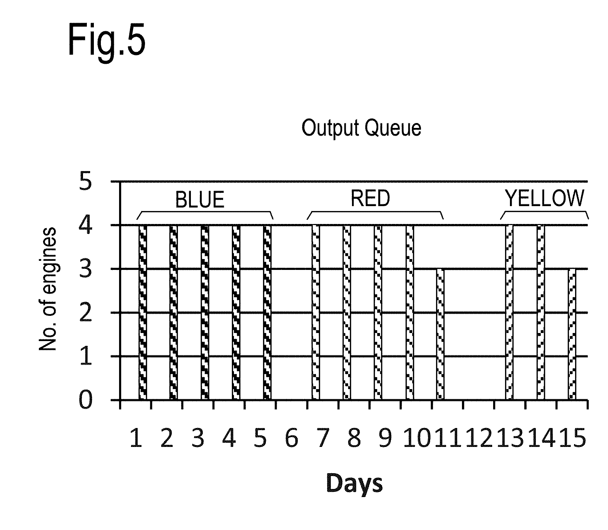

Figure 5 shows an example maintenance schedule for a fleet of engines having a plurality of incipient faults, as determined in accordance with the planning system of the present disclosure.

In this simplified example, each repair requires one quarter of a day to complete. Consequently, up to four engines having linked quantities can be repaired on a given day. Alternatively, a similar situation will occur where each repair takes one day, and there are four repair bays. However, where an engine having a non-linked quantity is then repaired, 24 hours are required in order to setup the next repair process.

Indications of incipient faults are received from the engines 12 by the server 34, and forwarded by the fault forwarding sub-system to the queuing sub-system 40. In this example, 51 engines are identified as having incipient faults within the fleet, comprising 20 engines having a first linked quantity (marked on figures 4 and 5 as "red" engines), 11 engines having a second linked quantity (marked on figures 4 and 5 as "yellow" engines), and 20 engines having a third linked quantity (marked on figures 4 and 5 as "blue" engines).

Referring to figure 5, in the finalised maintenance schedule, each of the red, blue and yellow engines are grouped, such that engines having incipient faults in a common module are grouped accordingly, such that two or more of these engines occupy adjacent queue positions. The groups are then ordered such that the largest group occupies the first position in the queue, with smaller groups occupying later positions in accordance with size. Individual engines within each group may be ordered in accordance with their predicted time before failure, or other secondary considerations.

Once the engine maintenance plan is made, the queuing sub-system 40 provides a Kanban "pull" signal to a maintenance operation. The pull signal is used to determine which aircraft are to be taken out of service, such that the maintenance operations are to take place. In general, a pull is signal is only made where the aircraft having the respective engine occupies are relatively high position on the queue, for example one or two days. Alternatively, the pull signal could be made on an individual basis, so that the aircraft can continue to operate for as long as possible. In this case, on day 1, a pull signal would be made to withdraw the aircraft having the blue engines in the first position in the queue.

Consequently, all of the engines in this example can be repaired within 15 days. In comparison, where the engines to be repaired on the basis of the order in which the faults occurred, 26 days would be required to complete the repairs, in view of the additional setup times involved.

It will be understood that the maintenance plan will be updated on a continual basis, such that the maintenance plan at a given time will not necessarily reflect the order in which engines are serviced. For example, consider the situation where, prior to a pull signal being provided to pull any of the blue engines, a further red engine is identified as having an incipient fault, and the engine within the red group is identified as having a higher risk of impending failure than any of the engines within the blue group. Accordingly, the red group will now contain the same number of engines as the blue group, and so be given a higher priority in view of the higher risk of impending failure of one of the engines within that group. Consequently, when a Kanban pull signal is given, a red engine will be pulled. Alternatively, it may be determined that one of the red engines will fail prior to the aircraft being pulled in accordance with this maintenance plan. Consequently, the red group will be prioritised ahead of the blue group in spite of this group being smaller.

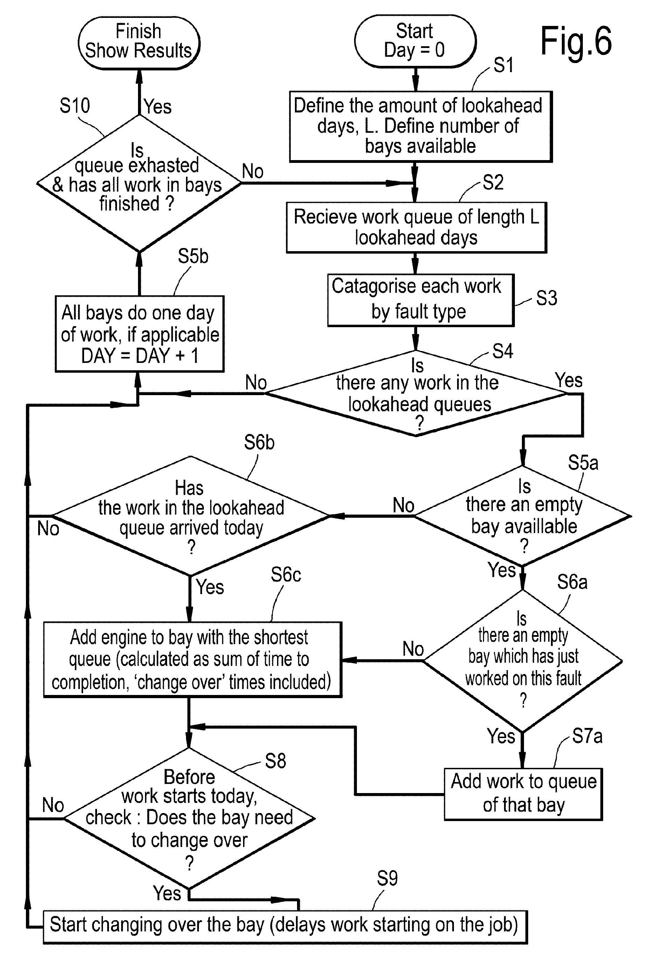

Figure 6 illustrates a method of providing an engine maintenance plan from the data of figure 4, in accordance with the present invention.

In a first step S1, the number of look-ahead days L is determined in accordance with the capabilities of the engine health monitoring system to determine incipient failures. In this example, L is 10 days. The number of bays in the maintenance facility is also defined in this step, in this case four.

In a second step S2, a work queue is received from the engine health monitoring systems of the engines 10 of the fleet by the fault forwarding sub-system 39. The work queue comprises incipient faults of the engines 10 that will need to be addressed by maintenance procedures, and the predicted time until maintenance is required.

In a third step S3, the incipient faults are categorised into groups of linked incipient faults (such as the blue, red and yellow groups shown in figure 4) by the queuing sub-system 40.

In step S4, the work queue is checked to determine if there is any work remaining in the queue. If so, the system polls the maintenance facility to determine if any bays are available in step S5a. If not, the maintenance facility is instructed to carry out work as normal, in accordance with a conventional "as and when" based maintenance routine.

Following step S5a, if an empty bay is available, the system polls the maintenance facility in step S6a to determine whether there is an empty bay which has just worked on a fault linked to any of the faults in the work queue, i.e. a fault that would require the use of the same equipment or staff in order to conduct the maintenance operation of the engine.

If yes, in step S7a, the engine is added to the queue of that bay. Before the work commences however, the system check whether the bay needs to be changed over (i.e. to start work on another fault type) in step S8. If yes, the changeover is commenced in step S9. Following the changeover, the process continues to step S5b

Returning once more to step S5a, if there are not empty bays available, the system checks whether the work in the look-ahead queue has arrived in the workshop today in step S6b. If yes, the engine is added to the bay with the shortest queue, which is calculated as the sum of time to completion with the changeover times included. The process then continues to step S8.

However, if, in step S6b, the work in the lookahead queue has not arrived today, the process continues to step S5b.

Following step S5b, the process continues to step S10, in which the system checks whether the work queue is exhausted. If not, then the process returns to step S2. If it is, then the process is complete, and an output queue has been generated.

Embodiments of the present invention provide for significant progress towards automated optimisation of maintenance scheduling with minimal human intervention - allowing high value decision support and significant risk and cost reduction. The present invention is also applicable to maintenance or exchange scheduling for gas turbine engines used in power generation applications.

## Claims

1. A computerised aircraft engine maintenance planning system for maintaining an aircraft engine fleet comprising a plurality of aircraft engines, each engine in the fleet comprising an engine health monitoring system configured to provide data indicative of an incipient fault for a respective engine, the planning system comprising:
a fault forwarding sub-system configured to receive indications of incipient faults from respective engine health monitoring systems, the fault forwarding system being configured to identify two or more engines having linked incipient faults; and
a queuing sub-system configured to assign each engine identified as having an incipient fault to a virtual maintenance queue position;
wherein the queuing sub-system is configured to group engines having linked incipient faults to adjacent queue positions.

2. A system according to claim 1, wherein the linked incipient faults comprise one or both of incipient faults in equivalent modules or line replaceable units of the two or more engines, and faults requiring the use of the same repair process or repair equipment.

3. A system according to claim 1 or claim 2, wherein each engine health monitoring system is configured to provide a component remaining useful life estimation for the respective engine to the fault forwarding sub-system.

4. A system according to any of the preceding claims, wherein the queuing sub-system is configured to order grouped engines in the virtual queue such that engine groups are prioritised in order of descending size.

5. A system according to any of the preceding claims, wherein the queuing sub-system is configured to order grouped engines in the virtual queue such that engine groups having an engine having a component remaining useful life below a predetermined threshold are prioritised ahead of other engine groups.

6. A system according to claim 3 or any claim dependent thereon, wherein the engine having the lowest component useful life may be prioritised ahead of other engines within the respective engine group.

7. A system according to any of the preceding claims, wherein the queuing sub-system is configured to order grouped engines in the virtual queue such that the groups are prioritised in descending order of group size.

8. A system according to any of the preceding claims, wherein the queuing sub-system is configured to order grouped engines in the virtual queue such that a group having the same linked quantity as an engine currently undergoing a repair operation receives the highest priority in the queue.

9. A system according to any of the preceding claims, wherein the system further comprises an engine pull sub-system configured to provide a pull signal to a maintenance operation.

10. A system according to claim 9, wherein the pull sub-system is configured to provide a pull signal when the highest priority group has more than a predetermined number of engines, and then continue providing pull signals until the pulled group has no remaining engines, and / or when an engine within the highest priority group has a remaining life estimation below a predetermined threshold.

11. A computerised method of planning engine maintenance of an aircraft engine fleet, each engine in the fleet comprising an engine health monitoring system configured to provide an indication of an incipient fault for a respective engine, the method comprising:
using the engine health monitoring systems of respective engines to identify two or more engines having linked incipient faults;
assigning each engine identified as having an incipient fault to a virtual maintenance queue position in a queuing sub-system;
wherein engines having linked incipient faults are grouped to adjacent queue positions.

12. A data carrier comprising machine readable instructions for operation of one or more processors to perform the method claim 11.
